# EUROPEAN PATENT APPLICATION

(11) **EP 4 075 250 A1**
(43) Date of publication of application: **19.10.2022**
(21) Application number: 20900176.7
(22) Date of filing: 09.12.2020
(51) Int. Cl.: G06F 3/0484, G06F 3/0487

(54) **METHOD FOR CONTROLLING APPLICATION, AND ELECTRONIC DEVICE**

(30) Priority: 12.12.2019 CN 201911290798
(71) Applicant: Vivo Mobile Communication Co., Ltd., Dongguan, Guangdong 523863 (CN)
(72) Inventor: DONG, Xinguang, Dongguan, Guangdong 523863 (CN)
(74) Representative: Raffay & Fleck
(86) International application number: PCT/CN2020/134935
(87) International publication number: WO 2021/115329

(57) **Abstract**

A method for controlling an application, and an electronic device. The method comprises: receiving a first input of a user at a target position in a display screen of an electronic device (201), wherein the target position corresponds to the position where an under-screen camera of the electronic device is located; in response to the first input, displaying N identifiers (202), wherein each identifier is used for indicating an application that has a photographing function; receiving a second input of the user for a target identifier (203), wherein the target identifier is one of the N identifiers; and in response to the second input, executing a control operation corresponding to the second input for the target application indicated by means of the target identifier (204), wherein N is a positive integer.

## Description

### CROSS-REFERENCE TO RELATED APPLICATIONS

This application claims priority to Chinese Patent Application No. 201911290798.7, filed on December 12, 2019 in China, which is incorporated herein by reference in its entirety.

### TECHNICAL FIELD

Embodiments of this application relate to the field of communications technologies, and in particular, to an application control method and an electronic device.

### BACKGROUND

With continuous development of terminal technologies, electronic devices are increasingly widely used, and more and more applications (application, APP) with a photographing function are installed in the electronic devices.

Currently, when a user needs to operate (open or uninstall) an application A with a photographing function, for example, the user opens the application A. The user needs to first find an icon of the application A in a desktop, and then trigger, through an input, the electronic device to open the application A. However, because there are a large number of applications installed in the electronic device, the user may need to perform a plurality of page flip inputs to find the application A in the desktop of the electronic device, where an input of opening an application folder in the desktop may be further included.

Therefore, an operation process such as opening or uninstalling an application is cumbersome and time-consuming.

### SUMMARY

Embodiments of this application provide an application control method and an electronic device, to resolve an existing a problem that an operation process such as opening or uninstalling an application is cumbersome and time-consuming.

To resolve the foregoing technical problem, this application is implemented as follows:

According to a first aspect, an embodiment of this application provides an application control method, applied to an electronic device. The method includes: receiving a first input performed by a user in a target location on a display screen of the electronic device, where the target location corresponds to a location of an under-display camera of the electronic device; displaying N identifiers in response to the first input, where each identifier is used to indicate an application with a photographing function; receiving a second input performed by the user on a target identifier, where the target identifier is one of the N identifiers; and in response to the second input, executing a control operation corresponding to the second input on a target application indicated by the target identifier, where N is a positive integer.

According to a second aspect, an embodiment of this application provides an electronic device. The electronic device includes a receiving module, a display module, and an execution module, where the receiving module is configured to receive a first input performed by a user in a target location on a display screen of the electronic device, where the target location corresponds to a location of an under-display camera of the electronic device; the display module is configured to display N identifiers in response to the first input received by the receiving module, where each identifier is used to indicate an application with a photographing function; the receiving module is further configured to receive a second input performed by the user on a target identifier, where the target identifier is one of the N identifiers displayed by the display module; and the execution module is configured to: in response to the second input received by the receiving module, execute a control operation corresponding to the second input on a target application indicated by the target identifier, where N is a positive integer.

According to a third aspect, an embodiment of this application provides an electronic device, including a processor, a memory, and a computer program that is stored in the memory and that can be run by the processor, and when the computer program is executed by the processor, the steps of the application control method in the first aspect are implemented.

According to a fourth aspect, an embodiment of this application provides a computer-readable storage medium. The computer-readable storage medium stores a computer program, and when the computer program is executed by a processor, the steps of the application control method in the first aspect are implemented.

In the embodiments of this application, an electronic device may receive a first input performed by a user in a target location on a display screen of the electronic device, where the target location corresponds to a location of an under-display camera of the electronic device; display N identifiers in response to the first input, where each identifier is used to indicate an application with a photographing function; receive a second input performed by the user on a target identifier, where the target identifier is one of the N identifiers; and in response to the second input, execute a control operation corresponding to the second input on a target application indicated by the target identifier, where N is a positive integer. In this solution, the first input performed by the user in the target location on the display screen (a location corresponding to the location of the under-display camera) may trigger the electronic device to display the N identifiers used to indicate N applications with a photographing function, so that the user can control the target application corresponding to the target identifier by executing an operation on the target identifier in the N identifiers, without searching, through page flip, a desktop for an application icon corresponding to the target application with a photographing function. In this way, a process of operating the target application by the user can be simplified, operation time can be shortened, and convenience of controlling the electronic device can be further improved.

### BRIEF DESCRIPTION OF DRAWINGS

FIG. 1 is a schematic architectural diagram of a possible Android operating system according to an embodiment of this application;
FIG. 2 is a first flowchart of an application control method according to an embodiment of this application;
FIG. 3 is a first schematic diagram of an interface of an application control method according to an embodiment of this application;
FIG. 4 is a second schematic diagram of an interface of an application control method according to an embodiment of this application;
FIG. 5 is a third schematic diagram of an interface of an application control method according to an embodiment of this application;
FIG. 6 is a second flowchart of an application control method according to an embodiment of this application;
FIG. 7 is a third flowchart of an application control method according to an embodiment of this application;
FIG. 8 is a fourth schematic diagram of an interface of an application control method according to an embodiment of this application;
FIG. 9 is a schematic structural diagram of an electronic device according to an embodiment of this application; and
FIG. 10 is a schematic diagram of hardware of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

It should be understood that in this specification, a term "and/or" is an associative relationship for describing associated objects, indicating that three relationships may exist, for example, A and/or B, which may indicate three situations: A exists independently; A and B exist simultaneously; and B exists independently. In this specification, a symbol "/" indicates an "or" relationship between associated objects, for example, A/B indicates A or B.

In the specification and claims of this application, the terms "first", "second", "third", "fourth", and so on are intended to distinguish between different objects but do not describe a particular order of the objects. For example, a first input, a second input, a third input, and a fourth input are intended to distinguish between different inputs, instead of describing a particular order of the inputs.

In the embodiments of this application, the word such as "example" or "for example" is used to represent giving an example, an illustration, or a description. Any embodiment or design scheme described as "an example of" or "for example" in the embodiments of this application should not be explained as being more preferred or having more advantages than another embodiment or design scheme. Exactly, use of the term "example" or "for example" is intended to present a concept in a specific manner.

In the descriptions of the embodiments of this application, unless otherwise stated, "a plurality of" means two or more, for example, a plurality of processing units mean two or more processing units, and a plurality of elements mean two or more elements.

The embodiments of this application provide an application control method. In the embodiments of this application, an electronic device may receive a first input performed by a user in a target location on a display screen of the electronic device, where the target location corresponds to a location of an under-display camera of the electronic device; display N identifiers in response to the first input, where each identifier is used to indicate an application with a photographing function; receive a second input performed by the user on a target identifier, where the target identifier is one of the N identifiers; and in response to the second input, execute a control operation corresponding to the second input on a target application indicated by the target identifier, where N is a positive integer. In this solution, the first input performed by the user in the target location on the display screen (a location corresponding to the location of the under-display camera) may trigger the electronic device to display the N identifiers used to indicate N applications with a photographing function, so that the user can control the target application corresponding to the target identifier by executing an operation on the target identifier in the N identifiers, without searching, through page flip, a desktop for an application icon corresponding to the target application with a photographing function. In this way, a process of operating the target application by the user can be simplified, operation time can be shortened, and convenience of controlling the electronic device can be further improved.

The following uses the Android operating system as an example to describe a software environment to which the application cornel method provided in the embodiments of this application is applied.

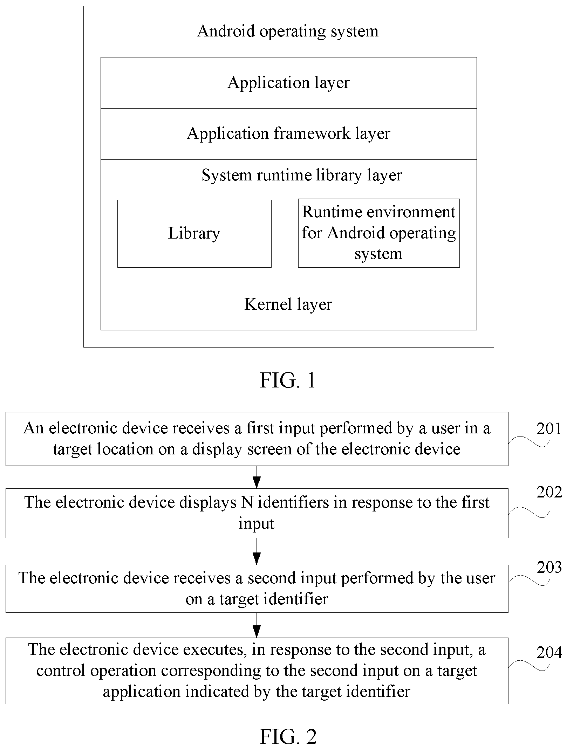

As shown in FIG. 1, FIG. 1 is a schematic architectural diagram of a possible Android operating system according to an embodiment of this application. In FIG. 1, an architecture of the Android operating system includes four layers: an application layer, an application framework layer, a system runtime library layer, and a kernel layer (which may be specifically a Linux kernel layer).

The application layer includes all applications in the Android operating system (including a system application and a third-party application).

The application framework layer is an application framework, and the developer may develop some applications based on the application framework layer when following a development rule of the application framework.

The system runtime library layer includes a library (also referred to as a system library) and an Android operating system runtime environment. The library mainly provides the Android operating system with various resources required by the Android operating system. The Android operating system runtime environment is used to provide the Android operating system with a software environment.

The kernel layer is an operating system layer of the Android operating system, and is a bottom-most layer in the Android operating system software layers. The kernel layer provides the Android operating system with a core system service and a hardware-related driver based on the Linux kernel.

The Android operating system is used as an example. In the embodiments of this application, a developer may develop, based on the system architecture of the Android operating system shown in FIG. 1, a software program to implement the application control method provided in the embodiments of this application, so that the application control method can run based on the Android operating system shown in FIG. 1. That is, a processor or an electronic device may run the software program in the Android operating system to implement the application control method provided in the embodiments of this application.

The electronic device in the embodiments of this application may be a mobile electronic device, or may be a non-mobile electronic device. The mobile electronic device may be a mobile phone, a tablet computer, a laptop computer, a palmtop computer, an in-vehicle terminal, a wearable device, a ultra-mobile personal computer (ultra-mobile personal computer, UMPC), a netbook, or a personal digital assistant (personal digital assistant, PDA). The non-mobile terminal may be a personal computer (personal computer, PC), a television (television, TV), an automated teller machine or a self-service machine. This is not specifically limited in the embodiments of this application.

The application control method provided in the embodiments of this application may be executed by the foregoing electronic device (including a mobile electronic device and a non-mobile electronic device), or a function module and/or a function entity that can implement the method in the electronic device. Specifically, this may be determined based on an actual use requirement, and is not limited in the embodiments of this application. Taking the electronic device as an example, the following describes the application control method provided in the embodiments of this application.

Referring to FIG. 2, an embodiment of this application provides an application control method, applied to an electronic device. The method may include the following step 201 to step 204.

Step 201: An electronic device receives a first input performed by a user in a target location on a display screen of the electronic device.

The target location corresponds to a location of an under-display camera of the electronic device.

The application control method provided in this embodiment of this application is applied to the electronic device with the under-display camera. It can be understood that the target location is perpendicular to the location of the under-display camera of the electronic device, that is, in a direction perpendicular to the display screen and pointing from the display screen to the inside of the electronic device, the under-display camera is below the target location of the display screen. A horizontal size of the target location (in this embodiment of this application, a size parallel to a plane in which the display screen is located is referred to as the horizontal size) may be the same as or may be different from a horizontal size of the location of the under-display camera. This is not limited in this embodiment of this application. Content such as an image and a text may be displayed in the target location, and the first input may also be received in the target location.

Optionally, in this embodiment of this application, the first input may be a tap input performed by the user in the target location, or may be a slide input performed by the user in the target location, or may be another feasible input. Specifically, this may be determined based on an actual use requirement, and is not limited in this embodiment of this application.

For example, the tap input may be a single-tap input, a double-tap input, or an input in which a preset quantity of times of tapping is continuously performed. The slide input may be a slide input in any direction, for example, a slide input in a clockwise direction, a slide input in a counterclockwise direction, an upward slide input, a downward slide input, a left slide input, a right slide input, or the like.

In this embodiment of this application, an interface currently displayed on the display screen may be any interface, for example, may be a desktop of the electronic device, or may be an interface of any application. This embodiment of this application sets no limitation thereto.

Step 202: The electronic device displays N identifiers in response to the first input.

Each identifier is used to indicate an application with a photographing function, where N is a positive integer.

Optionally, in this embodiment of this application, an application with a photographing function may be, for example, a camera, an instant social application such as WeChat or QQ, a shared bicycle application, a shopping or payment application such as Taobao or Alipay, or another application. This is not limited in this embodiment of this application.

Optionally, in this embodiment of this application, each identifier may be an application icon, an application name, an application interface thumbnail, or the like indicated by the identifier. This is not limited in this embodiment of this application.

Optionally, the N identifiers may be displayed in a preset area of the desktop. In this embodiment of this application, the preset area may be an area on a page in the desktop. The preset area may also be a part of the desktop, is an independent area, and does not belong to any page in the desktop. In this case, in a process in which the user triggers page flip in the desktop of the electronic device, the N identifiers do not change with a change of the page, and are always displayed in the preset area of the desktop (that is, regardless of which page is displayed in the current desktop, the N identifiers are always displayed in the current desktop).

Optionally, the N identifiers may be displayed with the current interface on one display screen through split-screen viewing. The N identifiers may also be displayed on different display screens of the electronic device. The N identifiers may also be displayed on a first interface, and the first interface covers the current interface for display (that is, the electronic device updates the current interface to the first interface in response to the first input, where the first interface includes the N identifiers).

Optionally, the N identifiers are displayed in a hover box on a current interface in a first preset manner.

Further, optionally, the N identifiers may be displayed on a second interface, and the second interface is displayed in a hover box on the current interface. Alternatively, the N identifiers may be displayed on a first control, and the first control is displayed in a hover box on the current interface. Another feasibility case may also be included. This is not limited in this embodiment of this application.

Optionally, in this embodiment of this application, the first preset manner includes at least one of the following: being arranged and displayed in a semi-annular shape around the target location, and being sequentially displayed in a second preset manner from the middle to the two sides, where sizes of identifiers are successively reduced based on the second preset manner.

Optionally, in this embodiment of this application, the second preset manner includes any one of the following: use frequency of the user (that is, frequency of using an application indicated by an identifier by the user within a specified time period) is from high to low, a last running moment in the foreground (that is, a moment of using an application indicated by an identifier for the last time), is from near to far from the current moment and frequency of using the photographing function(that is, a frequency of using a photographing function of an application indicated by an identifier by the user within a specified time period) is from high to low.

In this embodiment of this application, identifiers are sequentially displayed from the middle to the two sides in the second preset manner, and/or sizes of identifiers are successively reduced in the second preset manner, thereby facilitating user operation. For example, if the second preset manner is that use frequency of the user is from high to low, an identifier of an application with higher use frequency is closer to the middle of a semi-ring shape and/or has a larger size. Therefore, the more visible the identifier is in the half-ring shape, the easier it is for the user to find. On the contrary, an identifier of an application with lower use frequency is closer to an edge of the semi-ring shape and/or has a smaller size. Therefore, the less visible the identifier is in the half-ring shape, the less easy it is for the user to find. However, for operation experience of the user, a size of an identifier is not infinitely smaller, and there is a minimum limit value (that is, a size of each identifier is greater than or equal to a preset threshold).

Optionally, in this embodiment of this application, the second preset manner also includes any one of the following: use frequency of the user is from low to high, a last running moment in the foreground is from far to near from the current moment, and frequency of using the photographing function is from low to high.

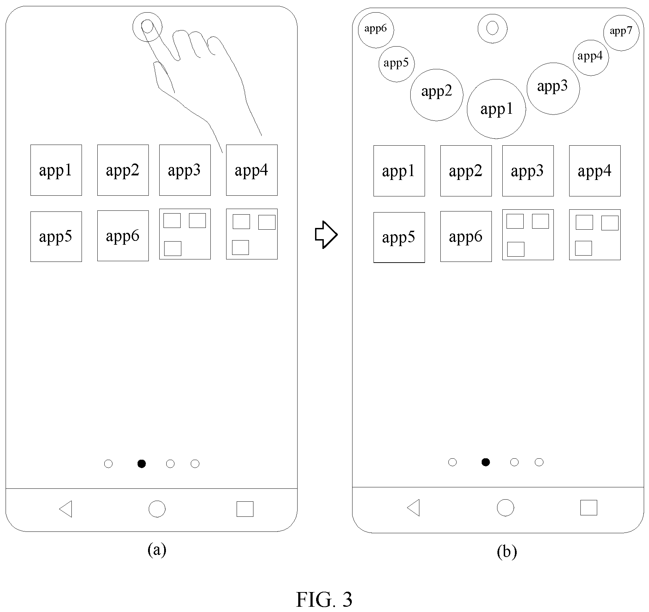

For example, as shown in (a) in FIG. 3, the current interface is a page in the desktop. If the user taps a target location, as shown in (b) in FIG. 3, the electronic device displays the N identifiers, where the N identifiers are sequentially displayed in a semi-ring shape around the target location from the middle of the semi-ring shape to the two sides based on use frequency of the user. Higher use frequency of the user indicates a larger size of an identifier.

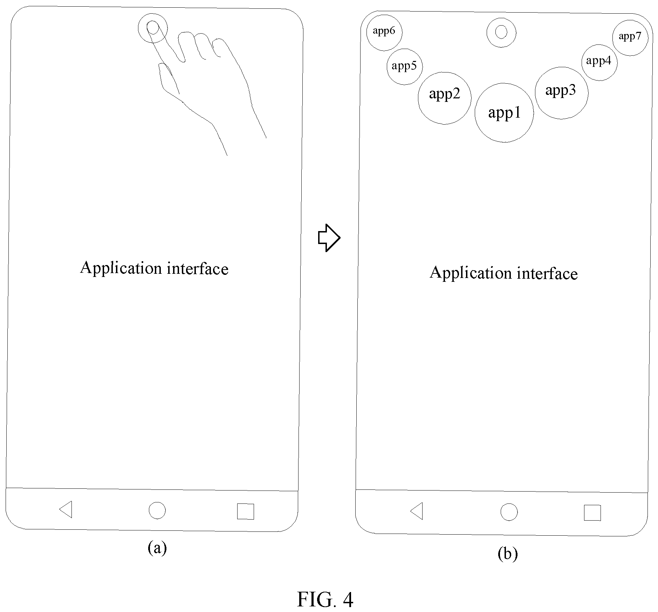

For example, as shown in (a) in FIG. 4, the current interface is an interface of an application. If the user taps a target location, as shown in (b) in FIG. 4, the electronic device displays the N identifiers, where the N identifiers are sequentially displayed in a semi-ring shape around the target location from the middle of the semi-ring shape to the two sides based on use frequency of the user. Higher use frequency of the user indicates a larger size of an identifier.

Optionally, the first preset manner may further include at least one of the following: being sequentially displayed in a preset location in a preset ring shape (for example, a circular ring shape, an elliptic ring shape, a square ring shape, or a triangular ring shape), and being sequentially displayed in a clockwise direction (or a counterclockwise direction) in the second preset manner, where sizes of identifiers are successively reduced in the second preset manner.

In this embodiment of this application, the first preset manner may further include another feasibility manner. This is not limited in this embodiment of this application.

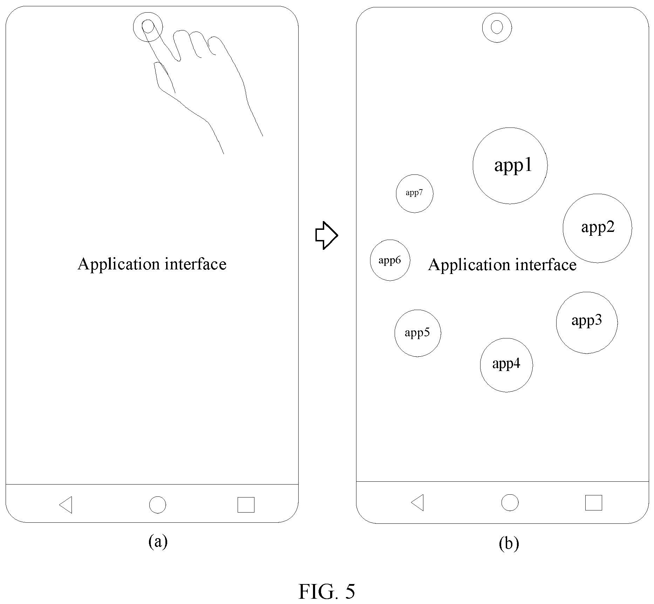

For example, as shown in (a) in FIG. 5, the current interface is an interface of an application. If the user taps a target location, as shown in (b) in FIG. 5, the electronic device displays the N identifiers, where the N identifiers are displayed in a circular shape around a center of the display screen and are sequentially displayed in a clockwise direction based on use frequency of the user. Higher use frequency of the user indicates a larger size of an identifier.

Step 203: The electronic device receives a second input performed by the user on a target identifier.

The target identifier is one of the N identifiers.

Optionally, the second input may be a tap input performed by the user on the target identifier, or the second input may be a slide input performed by the user on the target identifier, or the second input may be a drag input performed by the user on the target identifier, or the second input may be another feasible input. This is not limited in this embodiment of this application.

For example, for descriptions of the tap input and the slide input, refer to the related descriptions of the tap input and the slide input in the descriptions of the first input in step 201. Details are not described herein again. The drag input may be a drag input in any direction, for example, a drag input in a clockwise direction, a drag input in a counterclockwise direction, an upward drag input, a downward drag input, a left drag input, a right drag input, or the like.

Step 204: In response to the second input, the electronic device executes a control operation corresponding to the second input on a target application indicated by the target identifier.

Optionally, in this embodiment of this application, the control operation corresponding to the second input may include an operation of displaying a preset interface of the target application or an operation of uninstalling the target application. It can be understood that different second inputs may correspond to different control operations. This is specifically described in the following embodiment. Details are not described herein.

In this embodiment of this application, the preset interface of the target application may be any interface of the target application, for example, may be a main interface of the target application, or may be a function interface of the target application (that is, an interface of a function of the APP).

Optionally, in a case that the control operation includes the operation of displaying the preset interface of the target application, the preset interface is an interface corresponding to a photographing function of the target application, for example, a payment scan interface of a payment application, a scan interface of an instant social application, and a vehicle scan interface of a shared bicycle application.

It can be understood that the electronic device may associate each identifier with an interface corresponding to a photographing function of an application indicated by the identifier (in the following, "an interface corresponding to a photographing function of an application indicated by the identifier" is referred to as "a photographing function interface corresponding to the identifier"). When the user taps the target identifier, the electronic device may directly display the interface corresponding to the photographing function of the target application.

For example, the electronic device stores a correspondence between each identifier and a packet name, a class name, or the like of a photographing function interface corresponding to the identifier. When the user taps the target identifier, the electronic device may directly jump to the photographing function interface corresponding to the target identifier based on a packet name, a class name, and the like that are corresponding to the target identifier.

For example, the electronic device stores a storage path of a photographing function interface corresponding to each identifier. When the user taps the target identifier, the electronic device may directly jump to the photographing function interface corresponding to the target identifier based on a storage path of the photographing function interface corresponding to the target identifier.

In this embodiment of this application, the preset interface is the interface corresponding to the photographing function of the target application. In this way, when the user needs to use the photographing function of the target application, the user may trigger the electronic device to directly display the interface corresponding to the photographing function of the target application through the second input on the target identifier. Therefore, a photographing function option (or control) does not need to be first found in the target application, and the interface corresponding to the photographing function is triggered through an input on the photographing function option (or control), so that an operation process of the user can be simplified, operation time can be shortened, and control convenience of the electronic device can be improved.

An embodiment of this application provides an application control method. In this embodiment of this application, an electronic device may receive a first input performed by a user in a target location on a display screen of the electronic device, where the target location corresponds to a location of an under-display camera of the electronic device; display N identifiers in response to the first input, where each identifier is used to indicate an application with a photographing function; receive a second input performed by the user on a target identifier, where the target identifier is one of the N identifiers; and in response to the second input, execute a control operation corresponding to the second input on a target application indicated by the target identifier, where N is a positive integer. In this solution, the first input performed by the user in the target location on the display screen (a location corresponding to the location of the under-display camera) may trigger the electronic device to display the N identifiers used to indicate N applications with a photographing function, so that the user can control the target application corresponding to the target identifier by executing an operation on the target identifier in the N identifiers, without searching, through page flip, a desktop for an application icon corresponding to the target application with a photographing function. In this way, a process of operating the target application by the user can be simplified, operation time can be shortened, and convenience of controlling the electronic device can be further improved.

Optionally, the electronic device executes different control operations on the target application based on different second inputs.

For example, different types of second inputs may correspond to different control operations. For example, if the second input is a tap input performed by the user on the target identifier, the electronic device displays the preset interface of the target application in response to the second input. If the second input is a drag input performed by the user on the target identifier, the electronic device uninstalls the target application in response to the second input.

For example, input parameters may be different, but second inputs of a same type correspond to different control operations.

For example, step 204 may be specifically implemented by using the following step 204a and step 204b.

Step 204a: The electronic device obtains an input parameter of the second input in response to the second input.

Step 204b: The electronic device executes a control operation corresponding to the input parameter on the target application.

Optionally, in this embodiment of this application, the input parameter of the second input may include at least one of an input direction, an input area, an input track, and an input end location of the second input. The input parameter may further include another feasibility parameter. This is not limited in this embodiment of this application.

For example, if the second input is a drag input performed by the user on the target identifier, the input direction of the second input may be a drag direction of the target identifier by the user; the input area of the second input may be a drag area of the target identifier by the user; the input track of the second input may be a drag track of the target identifier by the user; and the input end location of the second input may be a drag end location of the target identifier by the user. For example, if the drag input performed by the user on the target identifier is that the user drags the target identifier from a point X to a point Y on the current interface, the drag direction of the target identifier by the user may be a direction of a line from the point X to the point Y; the drag area of the target identifier by the user may be an area in which the X point and the Y point are located; the drag track of the target identifier by the user may be a line from the X point to the Y point; and the drag end location of the target identifier by the user may be the point Y

In this embodiment of this application, the electronic device may obtain the input parameter of the second input performed by the user on the target identifier, and execute the control operation corresponding to the input parameter on the target application corresponding to the target identifier, to control the target application.

Optionally, in this embodiment of this application, the following exemplarily describes step 204a and step 204b by using an example in which the input parameter of the second input includes the input end location of the second input.

For example, step 204a may be specifically implemented by using the following step 204a1, and step 204b may be specifically implemented by using the following step 204b1 or step 204b2.

Step 204a1: The electronic device obtains the input end location of the second input.

Step 204b1: Display the preset interface of the target application in a case that the input end location of the second input is in a first area.

Step 204b2: Uninstall the target application in a case that the input end location of the second input is in a second area.

The first area and the second area may be two different areas. For example, the first area and the second area may be two different areas on the display screen.

It can be understood that either of step 204b1 and step 204b2 may be performed, that is, after performing step 204a1, the electronic device may perform step 204b1 or step 204b2.

In this embodiment of this application, if the input end location of the second input performed by the user on the target identifier is in different areas, the electronic device may execute different control operations on the target application corresponding to the target identifier, to flexibly control the target application.

In this embodiment of this application, that the electronic device uninstalls the target application may be understood as that the electronic device deletes the target identifier (being deleted from an interface for displaying the target identifier), an installation package of the target application, data generated in a process in which the user uses the target application, and the like.

Optionally, in this embodiment of this application, a method for uninstalling the target application by the electronic device may be one of the following:
(1) The electronic device directly deletes the target identifier, the installation package of the target application, the data generated in the process in which the user uses the target application, and the like.
(2) The electronic device moves the target identifier to a predefined deletion area (for example, a predefined "deletion folder"), and directly deletes the target identifier, the installation package of the target application, the data generated in the process in which the user uses the target application, and the like after a predefined time.

It can be understood that, in the foregoing (1), if the user needs to reuse the target application, the user may re-install the target application in the electronic device, and the re-installed target application does not include the data generated in the process in which the user previously uses the target application. In the foregoing (2), if the user needs to reuse the target application within a predefined time, the user may directly resume the target application from the predefined deletion area without re-installing the target application, and the resumed target application includes the data generated in the process in which the user previously uses the target application. If the user needs to reuse the target application after a predefined time, the user may re-install the target application in the electronic device, and the re-installed target application does not include the data generated in the process in which the user previously uses the target application.

In this embodiment of this application, the predefined deletion area may be a "deletion folder" set on any page of the desktop of the electronic device. The user may resume the target application corresponding to the target identifier by operating the target identifier in the "deletion folder". The predefined time may be any possible time such as 7 days, 15 days, 30 days, or 60 days. Specifically, this may be determined based on an actual use requirement, and is not limited in this embodiment of this application.

Optionally, in this embodiment of this application, the predefined deletion area and the predefined time may be set by default by the electronic device. Alternatively, an "uninstall setting" option may be added to the "set" target application, and then the user sets the target application in the "uninstall setting" option. Specifically, this may be determined based on an actual use requirement, and is not limited in this embodiment of this application.

Optionally, before the N identifiers are displayed, the electronic device needs to first determine the N identifiers based on the first input.

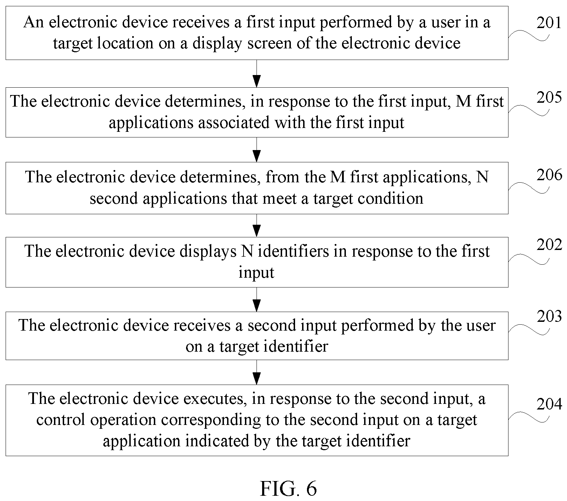

For example, with reference to FIG. 2, as shown in FIG. 6, before step 202, the application control method provided in this embodiment of this application may further include the foregoing step 205 and step 206.

Step 205: The electronic device determines, in response to the first input, M first applications associated with the first input.

Each first application is an application with a photographing function, and M is a positive integer greater than or equal to N.

It can be understood that the first input is used to trigger the electronic device to display an identifier of an application with a photographing function, and the electronic device determines, in response to the first input, all applications with a photographing function in the electronic device as the M first applications.

Step 206: The electronic device determines, from the M first applications, N second applications that meet a target condition.

Optionally, the target condition includes any one of the following: N applications that the user uses most frequently, N applications that were last running in the foreground from a current moment, and N applications that use a photographing function most frequently; and the N second applications are applications indicated by the N identifiers (the N second applications are in a one-to-one correspondence with the N identifiers). The target condition may further include other content. This is not limited in this embodiment of this application.

It can be understood that, in this embodiment of this application, an interface in a system of the electronic device records a quantity of times that each application is used in a period of time, for example, a quantity of times that the application is opened in half a month. Alternatively, an interface in a system of the electronic device records a running moment at which each application runs last at a foreground within a specific time, for example, a running moment at which the application runs last at the foreground within a week. Alternatively, an interface in a system of the electronic device records a quantity of times that a photographing function of each application is used within a specific time, for example, a quantity of times that the photographing function of the application is used within 10 days.

In this embodiment of this application, because the large number of applications with a photographing function may be installed in the electronic device, identifiers of all the applications cannot be displayed at the same time. In addition, displaying identifiers of the large number of applications may also confuse user selection. Therefore, in this embodiment of this application, identifiers of the N second programs that meet the target condition are preferentially selected for the user (applications that may last need to be operated by the user), thereby facilitating user selection.

Optionally, step 206 may be specifically implemented by using the following step 206a and step 206b.

Step 206a: The electronic device sorts the M first applications in a second preset manner.

Step 206b: The electronic device determines that sorted first applications in the M first applications in the first N locations are the N second applications.

It can be understood that the M first applications are sorted in the second preset manner, and the first applications in the first N locations are applications that meets the target condition in the M first applications.

Optionally, the electronic device may directly select, without sorting the M first applications, the applications that meet the target condition in the M first applications as the N second applications.

Optionally, in this embodiment of this application, after the M first applications are sorted in the second preset manner, a list may be generated, and the N second applications are the first applications in the first N locations in the list.

In this embodiment of this application, the M first applications are sorted, and the N second applications in the first N locations are first displayed, thereby facilitating user operation. In addition, in a case that no application is required by the user in the N second applications, the electronic device replaces a new application for user selection.

Optionally, in a case that the N identifiers do not include the target identifier corresponding to the target application required by the user, the user may trigger, through an input, the electronic device to replace at least one of the N identifiers.

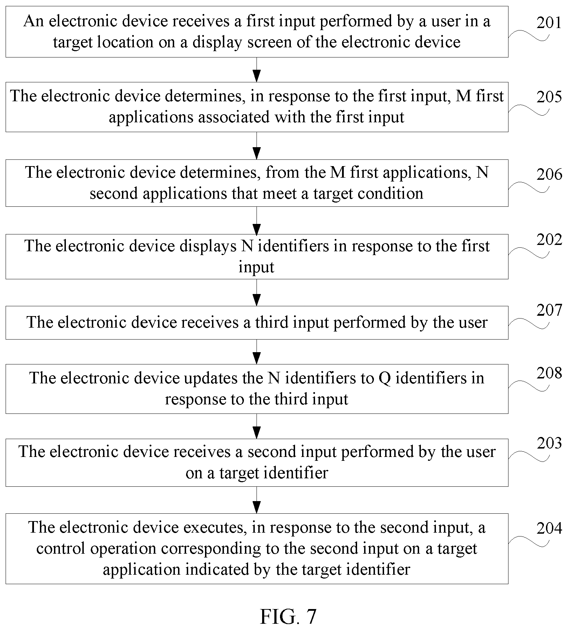

For example, with reference to FIG. 6, as shown in FIG. 7, before step 203, the application control method provided in this embodiment of this application may further include the foregoing step 207 and step 208.

Step 207: The electronic device receives a third input performed by the user.

Optionally, the third input may be an input performed by the user to change a function option (or control) (that is, an input of changing a batch of identifiers) (hereinafter referred to as a first type of third input), may be an input performed by the user on at least one of the N identifiers (triggering the electronic device to update the first identifier to another identifier) (hereinafter referred to as a second type of third input), or may be an input performed by the user to change the second preset manner (for example, that the N identifiers are sorted in descending order of use frequency is changed to that the N identifiers are sorted based on the last running moment in the foreground from the current moment from near to far) (hereinafter referred to as a third type of third input), or may be another feasible input. This is not limited in this embodiment of this application.

Optionally, the third input may be a tap input, a slide input, a drag input, a combination input, or the like of the user. This is not limited in this embodiment of this application.

For example, for descriptions of the tap input and the slide input, refer to the related descriptions of the tap input and the slide input in the foregoing descriptions of the first input in step 201. For descriptions of the drag input, refer to the descriptions of the drag input in the foregoing descriptions of the second input in step 203. Details are not described herein again. The combination input may be, for example, a long-press drag input, a long-press slide input, or the like. This is not limited in this embodiment of this application.

Step 208: The electronic device updates the N identifiers to Q identifiers in response to the third input.

The target identifier is one of the Q identifiers, and Q is a positive integer. Generally, Q is less than or equal to N.

Optionally, for the first type of third input, any one of the Q identifiers is different from an identifier in the N identifiers. It can be understood that, in response to the third input, the electronic device replaces all of the N identifiers with new identifiers (identifiers indicating other applications).

Optionally, for the second type of third input, the third input is an input on a first identifier in the N identifiers, and the Q identifiers include an identifier other than the first identifier in the N identifiers. The first identifier may be at least one of the N identifiers. It can be understood that, in response to the third input, the electronic device replaces a part of the N identifiers with new identifiers (identifiers indicating other applications).

It should be noted that, through one time of third input, an identifier displayed on the display screen may still not have an identifier (the target identifier) corresponding to an application required by the user. Therefore, through a plurality of times of third inputs, the user may enable the target identifier in the electronic device to include the identifier displayed on the display screen.

Optionally, for the third type of third input, identifiers in the Q identifiers are exactly the same as identifiers in the N identifiers, but the identifiers in the Q identifiers and the identifiers in the N identifiers are sorted in different order. Alternatively, identifiers in the Q identifiers are partially different or all different from identifiers in the N identifiers, and the identifiers in the Q identifiers and the identifiers in the N identifiers are sorted in different order.

Optionally, if the M first applications are sorted in the second preset manner to generate a list, the electronic device may arrange, at the end of the list, applications indicated by replaced identifiers in the N identifiers. In this way, in a process of updating an identifier, the replaced identifier is updated and displayed on the display screen again.

Optionally, in a case that the third input is an input on the first identifier in the N identifiers, before step 208, the application control method provided in this embodiment of this application may further include the following step 209.

Step 209: The electronic device deletes a use record of an application indicated by the first identifier.

It can be understood that when the electronic device deletes the use record of the application indicated by the first identifier, the application indicated by the first identifier is automatically arranged at the end of the list, and the next time the user triggers, though the first input, the electronic device to display the N identifiers, the N identifiers may no longer include the first identifier (unless the user uses the application indicated by the first identifier for a plurality times in the desktop, the first identifier may appear in the N identifiers in the second preset manner).

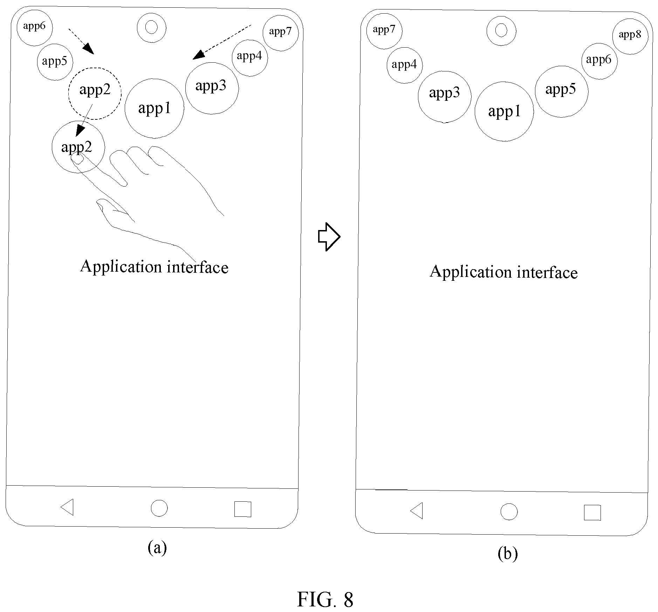

For example, as shown in (a) in FIG. 8, the electronic device displays seven identifiers "appl, app2, app3, app4, app5, app6, and app7". The user drags "app2" in a semi-annular shape (the third input) in a direction indicated by a solid arrow in the figure, other identifiers move toward a center of the semi-annular shape in a direction indicated by a dotted arrow in the figure, and a new identifier "app8" is added, and new seven identifiers are arranged in an updated order in the second preset manner. Finally, as shown in (b) in FIG. 8, the electronic device displays seven identifiers "appl, app3, app4, app5, app6, app7, and app8".

In this embodiment of this application, the use record of the application indicated by the first identifier is deleted, so that it can be ensured that the application indicated by the first identifier is arranged at the end of the list. Therefore, in an operation process of the user, the first identifier is no longer displayed on the display screen, thereby avoiding confusing the user.

The accompanying drawings in the embodiments of this application are illustrated with reference to the accompanying drawings in the embodiments of the independent claims. In specific implementation, the accompanying drawings may further be implemented with reference to any other accompanying drawings. This is not limited in the embodiments of this application. For example, with reference to FIG. 2, before step 203, the application control method provided in this embodiment of this application may further include the foregoing step 207 and step 208.

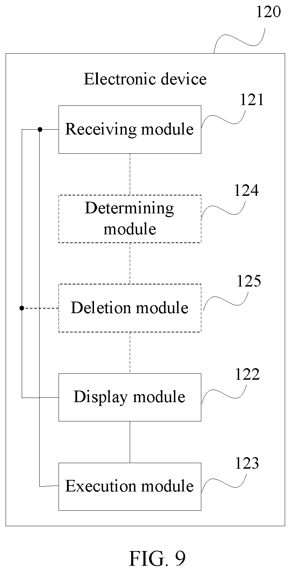

As shown in FIG. 9, an embodiment of this application provides an electronic device 120. The electronic device 120 includes a receiving module 121, a display module 122, and an execution module 123, where the receiving module 121 is configured to receive a first input performed by a user in a target location on a display screen of the electronic device, where the target location corresponds to a location of an under-display camera of the electronic device; the display module 122 is configured to display N identifiers in response to the first input received by the receiving module 121, where each identifier is used to indicate an application with a photographing function; the receiving module 121 is further configured to receive a second input performed by the user on a target identifier, where the target identifier is one of the N identifiers displayed by the display module 122; and the execution module 123 is configured to: in response to the second input received by the receiving module 121, execute a control operation corresponding to the second input on a target application indicated by the target identifier, where N is a positive integer.

Optionally, the electronic device 120 further includes a determining module 124. The determining module 124 is configured to: before the display module 122 displays the N identifiers, determine M first applications associated with the first input, and determine, from the M first applications, N second applications that meet a target condition, where each first application is an application with a photographing function; the target condition includes any one of the following: N applications that the user uses most frequently, N applications that were last running in the foreground from a current moment, and N applications that use a photographing function most frequently; the N second applications are applications indicated by the N identifiers; and M is a positive integer greater than or equal to N.

Optionally, the N identifiers are displayed in a hover box on a current interface in a first preset manner.

Optionally, the first preset manner includes at least one of the following: being arranged and displayed in a semi-annular shape around the target location, and being sequentially displayed in a second preset manner from the middle to the two sides, where sizes of identifiers are successively reduced based on the second preset manner; and the second preset manner includes any one of the following: use frequency of the user is from high to low, a last running moment in the foreground is from near to far from the current moment, and frequency of using the photographing function is from high to low.

Optionally, the receiving module 121 is further configured to: before receiving the second input performed by the user on the target identifier, receive a third input performed by the user. The display module 122 is further configured to update the N identifiers to Q identifiers in response to the third input received by the receiving module 121, where the target identifier is one of the Q identifiers, and Q is a positive integer.

Optionally, any one of the Q identifiers is different from an identifier in the N identifiers; or the third input is an input on a first identifier in the N identifiers, and the Q identifiers include an identifier other than the first identifier in the N identifiers.

Optionally, in a case that the third input is an input on the first identifier in the N identifiers, the electronic device 120 further includes a deletion module 125. The deletion module 125 is configured to delete a use record of an application indicated by the first identifier.

Optionally, the execution module 123 is specifically configured to obtain an input parameter of the second input; and execute control operation corresponding to the input parameter on the target application, where the input parameter includes at least one of an input direction, an input area, an input track, and an input end location; and the control operation includes an operation of displaying a preset interface of the target application or an operation of uninstalling the target application.

Optionally, in a case that the control operation includes the operation of displaying the preset interface of the target application, the preset interface is an interface corresponding to a photographing function of the target application.

It should be noted that, as shown in FIG. 9, modules necessarily included in the electronic device 120 are shown in a solid line frame, such as the receiving module 121, the display module 122, and the execution module 123. Modules that may or may not be included in the electronic device 120 are indicated by a dotted line frame, such as a determining module 124 and a deletion module 125.

The electronic device provided in the embodiments of this application can implement the processes shown in any one of FIG. 2 to FIG. 8 in the foregoing method embodiment. To avoid repetition, details are not described herein again.

An embodiment of this application provides an electronic device. In this embodiment of this application, the electronic device may receive a first input performed by a user in a target location on a display screen of the electronic device, where the target location corresponds to a location of an under-display camera of the electronic device; display N identifiers in response to the first input, where each identifier is used to indicate an application with a photographing function; receive a second input performed by the user on a target identifier, where the target identifier is one of the N identifiers; and in response to the second input, execute a control operation corresponding to the second input on a target application indicated by the target identifier, where N is a positive integer. In this solution, the first input performed by the user in the target location on the display screen (a location corresponding to the location of the under-display camera) may trigger the electronic device to display the N identifiers used to indicate N applications with a photographing function, so that the user can control the target application corresponding to the target identifier by executing an operation on the target identifier in the N identifiers, without searching, through page flip, a desktop for an application icon corresponding to the target application with a photographing function. In this way, a process of operating the target application by the user can be simplified, operation time can be shortened, and convenience of controlling the electronic device can be further improved.

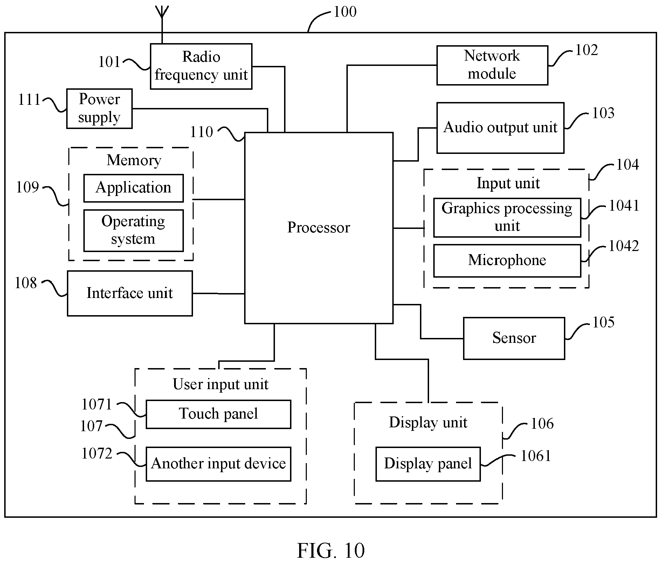

FIG. 10 is a schematic structural diagram of hardware of an electronic device according to the embodiments of this application. As shown in FIG. 10, an electronic device 100 includes but is not limited to components such as a radio frequency unit 101, a network module 102, an audio output unit 103, an input unit 104, a sensor 105, a display unit 106, a user input unit 107, an interface unit 108, a memory 109, a processor 110, and a power supply 111. A person skilled in the art may understand that a structure of the electronic device shown in FIG. 10 constitutes no limitation on the electronic device, and the electronic device may include more or fewer components than those shown in the figure, or have a combination of some components, or have a different component arrangement. In this embodiment of this application, the electronic device includes but is not limited to a mobile phone, a tablet computer, a notebook computer, a palmtop computer, an in-vehicle electronic device, a wearable device, a pedometer, and the like.

The user input unit 107 is configured to receive a first input performed by a user in a target location on a display screen of the electronic device, where the target location corresponds to a location of an under-display camera of the electronic device; the display unit 106 is configured to display N identifiers in response to the first input where each identifier is used to indicate an application with a photographing function; the user input unit 107 is further configured to receive a second input performed by the user on a target identifier, where the target identifier is one of the N identifiers; and the processor 110 is configured to: in response to the second input, execute a control operation corresponding to the second input on a target application indicated by the target identifier, where N is a positive integer.

According to the electronic device provided in this embodiment of this application, the electronic device may receive a first input performed by a user in a target location on a display screen of the electronic device, where the target location corresponds to a location of an under-display camera of the electronic device; display N identifiers in response to the first input, where each identifier is used to indicate an application with a photographing function; receive a second input performed by the user on a target identifier, where the target identifier is one of the N identifiers; and in response to the second input, execute a control operation corresponding to the second input on a target application indicated by the target identifier, where N is a positive integer. In this solution, the first input performed by the user in the target location on the display screen (a location corresponding to the location of the under-display camera) may trigger the electronic device to display the N identifiers used to indicate N applications with a photographing function, so that the user can control the target application corresponding to the target identifier by executing an operation on the target identifier in the N identifiers, without searching, through page flip, a desktop for an application icon corresponding to the target application with a photographing function. In this way, a process of operating the target application by the user can be simplified, operation time can be shortened, and convenience of controlling the electronic device can be further improved.

It should be understood that, in this embodiment of this application, the radio frequency unit 101 may be configured to receive and send information or a signal in a call process. Specifically, after receiving downlink data from a base station, the radio frequency unit 101 sends the downlink data to the processor 110 for processing. In addition, the radio frequency unit 101 sends uplink data to the base station. Usually, the radio frequency unit 101 includes but is not limited to an antenna, at least one amplifier, a transceiver, a coupler, a low noise amplifier, a duplexer, and the like. In addition, the radio frequency unit 101 may communicate with a network and another device through a wireless communication system.

The electronic device provides wireless broadband Internet access for the user by using the network module 102, for example, helping the user to send and receive an e-mail, brows a web page, and access streaming media.

The audio output unit 103 may convert audio data received by the radio frequency unit 101 or the network module 102 or stored in the memory 109 into an audio signal and output the audio signal as a sound. In addition, the audio output unit 103 may further provide an audio output (for example, a call signal received voice, or a message received voice) related to a specific function implemented by the electronic device 100. The audio output unit 103 includes a speaker, a buzzer, a telephone receiver, and the like.

The input unit 104 is configured to receive an audio signal or a video signal. The input unit 104 may include a graphics processing unit (Graphics Processing Unit, GPU) 1041 and a microphone 1042, and the graphics processing unit 1041 processes image data of a still picture or video obtained by an image capture apparatus (such as a camera) in a video capture mode or an image capture mode. A processed image frame may be displayed on the display unit 106. The image frame processed by the graphics processing unit 1041 may be stored in the memory 109 (or another storage medium) or sent by using the radio frequency unit 101 or the network module 102. The microphone 1042 may receive a sound and can process such sound into audio data. Processed audio data may be converted, in a call mode, into a format that can be sent to a mobile communication base station by using the radio frequency unit 101 for output.

The electronic device 100 further includes at least one sensor 105 such as a light sensor, a motion sensor, and another sensor. Specifically, the light sensor includes an ambient light sensor and a proximity sensor. The ambient light sensor may adjust luminance of the display panel 1061 based on brightness of ambient light. The proximity sensor may turn off the display panel 1061 and/or backlight when the electronic device 100 moves to an ear. As a type of the motion sensor, an accelerometer sensor may detect an acceleration value in each direction (generally, three axes), and detect a value and a direction of gravity when the accelerometer sensor is static, and may be used for recognizing a posture of the electronic device (such as screen switching between landscape and portrait modes, a related game, or magnetometer posture calibration), a function related to vibration recognition (such as a pedometer or a knock), and the like. The sensor 105 may further include a fingerprint sensor, a pressure sensor, an iris sensor, a molecular sensor, a gyroscope, a barometer, a hygrometer, a thermometer, an infrared sensor, and the like. Details are not described herein.

The display unit 106 is configured to display information entered by a user or information provided for a user. The display unit 106 may include a display panel 1061. The display panel 1061 may be configured in a form of a liquid crystal display (Liquid Crystal Display, LCD), an organic light-emitting diode (Organic Light-Emitting Diode, OLED), or the like.

The user input unit 107 may be configured to: receive entered digital or character information, and generate key signal input related to a user setting and function control of the electronic device. Specifically, the user input unit 107 includes a touch panel 1071 and another input device 1072. The touch panel 1071 is also referred to as a touchscreen, and may collect a touch operation performed by a user on or near the touch panel 1071 (such as an operation performed by a user on the touch panel 1071 or near the touch panel 1071 by using any proper object or accessory, such as a finger or a stylus). The touch panel 1071 may include two parts: a touch detection apparatus and a touch controller. The touch detection apparatus detects a touch location of the user, detects a signal brought by the touch operation, and sends the signal to the touch controller. The touch controller receives touch information from the touch detection apparatus, converts the touch information into touch point coordinates, and sends the touch point coordinates to the processor 110, and can receive and execute a command sent by the processor 110. In addition, the touch panel 1071 may be of a resistive type, a capacitive type, an infrared type, a surface acoustic wave type, or the like. The user input unit 107 may include another input device 1072 in addition to the touch panel 1071. Specifically, the another input device 1072 may include but is not limited to a physical keyboard, a functional button (such as a volume control button or a power on/off button), a trackball, a mouse, and a joystick. Details are not described herein.

Further, the touch panel 1071 may cover the display panel 1061. When detecting the touch operation on or near the touch panel 1071, the touch panel 1071 transmits the touch operation to the processor 110 to determine a type of a touch event, and then the processor 110 provides corresponding visual output on the display panel 1061 based on the type of the touch event. In FIG. 10, although the touch panel 1071 and the display panel 1061 are used as two independent parts to implement input and output functions of the electronic device, in some embodiments, the touch panel 1071 and the display panel 1061 may be integrated to implement the input and output functions of the electronic device. This is not specifically limited herein.

The interface unit 108 is an interface for connecting an external apparatus with the electronic device 100. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, a headset port, and the like. The interface unit 108 may be configured to receive input (for example, data information and power) from an external apparatus and transmit the received input to one or more elements in the electronic device 100 or may be configured to transmit data between the electronic device 100 and an external apparatus.

The memory 109 may be configured to store a software program and various data. The memory 109 may mainly include a program storage area and a data storage area. The program storage area may store an operating system, an application required by at least one function (such as a sound play function or an image play function), and the like. The data storage area may store data (such as audio data or an address book) created based on use of the mobile phone, and the like. In addition, the memory 109 may include a high-speed random-access memory, and may further include a nonvolatile memory, for example, at least one magnetic disk storage device, a flash storage device, or another volatile solid-state storage device.

The processor 110 is a control center of the electronic device, connects all parts of the entire electronic device by using various interfaces and lines, and performs various functions of the electronic device and data processing by running or executing a software program and/or a module that are/is stored in the memory 109 and by invoking data stored in the memory 109, to overall monitor the electronic device. The processor 110 may include one or more processing units. Optionally, an application processor and a modem processor may be integrated into the processor 110. The application processor mainly processes an operating system, a user interface, an application, and the like. The modem processor mainly processes wireless communications. It can be understood that, alternatively, the modem processor may not be integrated into the processor 110.

The electronic device 100 may further include the power supply 111 (such as a battery) that supplies power to each component. Optionally, the power supply 111 may be logically connected to the processor 110 by using a power supply management system, so as to implement functions such as charging and discharging management, and power consumption management by using the power supply management system.

In addition, the electronic device 100 includes some function modules not shown, and details are not described herein.

Optionally, an embodiment of this application further provides an electronic device, and the electronic device may include the processor 110 and the memory 109 shown in FIG. 10, and a computer program that is stored in the memory 109 and that can be run on the processor 110. When the computer program is executed by the processor 110, the processes of the foregoing application control method shown in any one of FIG. 2 to FIG. 8 in the foregoing method embodiment are implemented and a same technical effect can be achieved. To avoid repetition, details are not described herein again.

An embodiment of this application further provides a computer-readable storage medium. The computer-readable storage medium stores a computer program, and when the computer program is executed by a processor, the processes of the foregoing application control method shown in any one of FIG. 2 to FIG. 8 in the foregoing method embodiment are implemented and a same technical effect can be achieved. To avoid repetition, details are not described herein again. The computer-readable storage medium includes a read-only memory (Read-Only Memory, ROM), a random-access memory (Random Access Memory, RAM), a magnetic disk, or an optical disc.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing an electronic device (which may be a mobile phone, a computer, a server, an air conditioner, a network device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An application control method, wherein the method comprises:
receiving a first input performed by a user in a target location on a display screen of an electronic device, wherein the target location corresponds to a location of an under-display camera of the electronic device;
displaying N identifiers in response to the first input, wherein each identifier is used to indicate an application with a photographing function;
receiving a second input performed by the user on a target identifier, wherein the target identifier is one of the N identifiers; and
in response to the second input, executing a control operation corresponding to the second input on a target application indicated by the target identifier, wherein
N is a positive integer.

2. The method according to claim 1, wherein before the displaying N identifiers, the method further comprises:
determining M first applications associated with the first input, and determining, from the M first applications, N second applications that meet a target condition, wherein
each first application is an application with a photographing function; the target condition comprises any one of the following: N applications that the user uses most frequently, N applications that were last running in the foreground from a current moment, and N applications that use a photographing function most frequently; the N second applications are applications indicated by the N identifiers; and M is a positive integer greater than or equal to N.

3. The method according to claim 1 or 2, wherein the N identifiers are displayed in a hover box on a current interface in a first preset manner.

4. The method according to claim 3, wherein the first preset manner comprises at least one of the following: being arranged and displayed in a semi-annular shape around the target location, and being sequentially displayed in a second preset manner from the middle to the two sides, wherein sizes of identifiers are successively reduced in the second preset manner; and
the second preset manner comprises any one of the following: use frequency of the user is from high to low, a last running moment in the foreground is from near to far from the current moment, and frequency of using the photographing function is from high to low.

5. The method according to claim 1, wherein before the receiving a second input performed by the user on a target identifier, the method further comprises:
receiving a third input performed by the user; and
updating the N identifiers to Q identifiers in response to the third input, wherein
the target identifier is one of the Q identifiers, and Q is a positive integer.

6. The method according to claim 5, wherein any one of the Q identifiers is different from an identifier in the N identifiers; or
the third input is an input on a first identifier in the N identifiers, and the Q identifiers comprise an identifier other than the first identifier in the N identifiers.

7. The method according to claim 1, wherein the executing a control operation corresponding to the second input on a target application indicated by the target identifier comprises:
obtaining an input parameter of the second input; and
executing a control operation corresponding to the input parameter on the target application, wherein
the input parameter comprises at least one of an input direction, an input area, an input track, and an input end location; and the control operation comprises an operation of displaying a preset interface of the target application or an operation of uninstalling the target application.

8. The method according to claim 7, wherein in a case that the control operation comprises the operation of displaying the preset interface of the target application, the preset interface is an interface corresponding to a photographing function of the target application.

9. An electronic device, wherein the electronic device comprises a receiving module, a display module, and an execution module, wherein
the receiving module is configured to receive a first input performed by a user in a target location on a display screen of the electronic device, wherein the target location corresponds to a location of an under-display camera of the electronic device;
the display module is configured to display N identifiers in response to the first input received by the receiving module, wherein each identifier is used to indicate an application with a photographing function;
the receiving module is further configured to receive a second input performed by the user on a target identifier, wherein the target identifier is one of the N identifiers displayed by the display module; and
the execution module is configured to: in response to the second input received by the receiving module, execute a control operation corresponding to the second input on a target application indicated by the target identifier, wherein
N is a positive integer.

10. An electronic device, comprising a processor, a memory, and a computer program that is stored in the memory and that can be run by the processor, wherein when the computer program is executed by the processor, the steps of the application control method according to any one of claims 1 to 8 are implemented.

11. A computer-readable storage medium, wherein the computer-readable storage medium stores a computer program, and when the computer program is executed by a processor, the steps of the application control method according to any one of claims 1 to 8 are implemented.
